Europäisches Patentamt

European Patent Office

Office européen des brevets

(11) Veröffentlichungsnummer: **0 217 084**
**A1**

## (12) EUROPÄISCHE PATENTANMELDUNG

(21) Anmeldenummer: 86111167.2

(51) Int. Cl.⁴: **H01S 3/04** , H01S 3/03

(22) Anmeldetag: 12.08.86

(30) Priorität: 30.09.85 DE 3534925

(43) Veröffentlichungstag der Anmeldung:
08.04.87 Patentblatt 87/15

(84) Benannte Vertragsstaaten:
CH DE FR GB IT LI NL SE

(71) Anmelder: **Siemens Aktiengesellschaft Berlin
und München**
**Wittelsbacherplatz 2**
**D-8000 München 2(DE)**

(72) Erfinder: **Heynisch, Hinrich, Dr. rer. nat.,
Dipl.-Phys.**
**Im Birket 7**
**D-8032 Gräfelring(DE)**
Erfinder: **Hübner, Klemens, Dipl.-Ing. FH**
**Zaunkönigstrasse 28**
**D-8012 Ottobrunn(DE)**
Erfinder: **Hübner, Erwin, Dr. rer. nat.**
**Breitensteinstrasse 2**
**D-8018 Grafing(DE)**
Erfinder: **Krüger, Hans, Dipl.-Phys.**
**Peralohstrasse 13**
**D-8000 München 83(DE)**
Erfinder: **Golser, Hans, Ing. Grad.**
**Therese-Giehse-Allee 38**
**D-8000 München 83(DE)**

(54) **Gasentladungsrohr für einen Ionenlaser.**

(57) In einem Ionenlaser, dessen Entladungskanal in
einem Keramikrohr (2) verläuft, wird eine besonders
gute Kühlung und damit eine erhöhte Leistung ohne
Bruchgefahr für das Keramikrohr (2) erreicht, indem
eine Spirale (3) aus gut wärmeleitendem Material,
z.B. Kupfer, um das Keramikrohr (2) herumgelegt
und das Keramikrohr (2) mit dieser Spirale (3) in
eine Bohrung (10) einer Wärmeabführeinrichtung
eingesetzt ist und indem das Keramikrohr (2), die
Spirale (3) und der Wärmeableitkörper miteinander
verlötet sind, ohne daß der Zwischenraum (6) zwischen einzelnen Windungen der Spirale ausgefüllt
ist.

FIG 1

## Gasentladungsrohr für einen Ionenlaser.

Die vorliegende Erfindung betrifft ein Gasentladungsrohr für einen Ionenlaser nach dem Oberbegriff des Patentanspruchs 1. Ein derartiges Gasentladungsrohr ist aus der US-PS 3 753 144 bekannt. Dort wird das Keramikrohr in eine Flüssigkeit getaucht, welche als Wärmeübertragungsglied dient und die Wärme an eine Wärmeabführeinrichtung weitergibt, welche die Form eines Hohlzylinders besitzt und mit Kühlscheiben umgeben ist. Diese Ausführungsform bedingt ein Druckgefäß, da zum Wärmeübergang die Flüssigkeit verdampfen und sich an den Wänden niederschlagen soll und birgt die Gefahr in sich, daß die Flüssigkeit im Falle einer Überlastung soweit verdampft, daß das Keramikrohr zumindest teilweise über der Flüssigkeit zu liegen kommt und sich in diesem Bereich stärker erhitzt, als in dem von der Flüssigkeit benetzten Bereich, was zur Durchbiegung und zur Zerstörung des Keramikrohres führen kann.

Die Aufgabe, die der vorliegenden Erfindung zugrundeliegt, besteht in einem einfachen und sicheren Aufbau eines Gasentladungsrohres, welches für einen Argon-Ionenlaser von einigen hundert Milliwatt geeignet ist.

Diese Aufgabe wird bei einem Gasentladungsrohr gemäß dem Oberbegriff durch die kennzeichnenden Merkmale des Patentanspruchs 1 gelöst.

Die Spirale aus einem duktilen, gut wärmeleitenden Material gewährleistet einerseits einen guten Wärmeübergang zwischen dem Keramikrohr und der Wärmeabführeinrichtung und ist andererseits verformbar und damit dazu geeignet, Verschiebungen zwischen Teilen des Keramikrohres und der Wärmeabführeinrichtung, welche auf unterschiedliche Wärmeausdehnung bei Temperaturänderungen zurückzuführen sind, auszugleichen.

Daher kann als Wärmeabführeinrichtung ein Kupferstab mit den benötigten Bohrungen eingesetzt werden. Zur Verwendung von Luftkühlung sind auf diesen Kupferstab vorteilhaft Kühlscheiben aus Kupfer aufgelötet oder aufgeschweißt. In diese Wärmeabführeinrichtung ist vorteilhaft ein Keramikrohr eingesetzt, dessen innerer Durchmesser dem Durchmesser des Entladungskanals entspricht und der eine geringe, gerade noch zur Handhabung beim Zusammenbau ausreichende Festigkeit gewährleistende Wandstärke aufweist. Sobald nämlich das Keramikrohr in den Kühlkörper eingebaut ist, wird es in radialer Richtung durch diesen gehalten, braucht also keine Festigkeit gegenüber Biegespannungen oder dergleichen aufzuweisen.

Da das Keramikrohr sehr dünnwandig ausgeführt sein kann, läßt sich vorteilhaft die relativ preiswerte $Al_2O_3$-Keramik einsetzen, obwohl sie eine gegenüber dem in der US-PS 3 753 144 ebenfalls erwähnten BeO sehr viel geringere Wärmeleitfähigkeit besitzt.

Eine vorteilhafte Ausführungsform des Keramikrohres weist einen Innendurchmesser von ca. 1mm und einen Außendurchmesser von ca. 3mm auf, wobei das Keramikrohr von einem Kupferdraht umgeben ist, der mit einer Schicht eines üblichen Hartlotes, z.B. eines nickelhaltigen Silberlotes umgeben ist und einen Durchmesser von etwa 0,75mm aufweist, wobei das Keramikrohr mit der Spirale und der Wärmeabführeinrichtung ohne weiteren Lotzusatz verlötet ist. Durch dies Art der Lötung werden die Zwischenräume zwischen den einzelnen Windungen der Spirale nicht mit Lot angefüllt, eine Beweglichkeit in Richtung der Achse des Keramikrohres bleibt erhalten.

Bei hohen Anforderungen an die Präzision und an die Qualität des Wärmeüberganges ist es vorteilhaft, wenn die Spirale auf dem Keramikrohr durch spanabhebende Verformung auf den benötigten Außendurchmesser gebracht und anschließend mit dem Lot beschichtet und in die entsprechende Bohrung eingelötet ist.

Bei einem Durchmesser des für die Spirale verwendeten Drahtes von 0,75mm reicht bereits eine Steigung der Windungen der Spirale von etwa 1mm aus, um im verlöteten Zustand Zwischenräume zwischen den einzelnen Windungen zu gewährleisten.

Aufgrund der hohen Festigkeit und sehr geringen Formänderung der massiven Wärmeabführeinrichtung ist es vorteilhaft, wenn an dem Entladungsrohr die Elektroden und die Resonatorspiegel des Lasers befestigt sind.

Ein vorteilhaftes Verfahren zur Herstellung eines Entladungsrohres nach einem der Ansprüche 1 bis 7 besteht darin, daß die Spirale zunächst auf das Keramikrohr aufgelötet, anschließend zur Korrektur des Außendurchmessers abgedreht oder abgeschliffen, mit einer etwa 20µm starken Schicht aus einem Silberlot, evtl. mit Nickelzusatz, versehen und schließlich in die entsprechende Bohrung des Wärmeabführeinrichtung eingesetzt und durch Erwärmung ohne weitere Lotzugabe mit der Wärmeabführeinrichtung verlötet wird.

Bei weniger hohen Ansprüchen an die Wärmeabfuhr genügt es, wenn zur Herstellung eines Entladungsrohres nach einem der Ansprüche 1 bis 7 das Keramikrohr lötfähig gemacht, zusammen mit der Spirale in die Wärmeabführeinrichtung eingeführt wird und wenn in einem Arbeitsgang die drei genannten Teile miteinander verlötet werden.

Die Erfindung wird nun anhand von drei Figuren näher erläutert. Sie ist nicht auf die in den Figuren gezeigten Beispiele beschränkt.

Fig. 1 zeigt ein erfindungsgemäßes Entladungsrohr mit angebauten Elektroden und Spiegeln in geschnittener Ansicht,

Fig. 2 zeigt einen Ausschnitt aus Fig. 1,

Fig. 3 und 4 zeigen weitere Ausführungsformen der Erfindung.

Der Entladungskanal 1 eines Lasers liegt in einem Keramikrohr 2. Das Keramikrohr 2 ist in eine Bohrung 10 eines Wärmeabführeinrichtung 7 eingesetzt und zumindest im Bereich der Bohrung 10 von einer Spirale 3 bzw. 4 umwickelt. Die Spirale 3 bzw. 4 ist sowohl mit dem Keramikrohr 2 als auch mit der Zylinderwand 9 der Bohrung 10 verlötet. Zwischen den einzelnen Windungen der Spiralen 3 bzw. 4 liegt ein spiralförmiger Zwischenraum 6, der von festem Material frei ist. Der Durchmesser bzw. die größte Abmessung des Querschnittes der Spirale 3 bzw. 4 beträgt vorteilhaft 0,75mm, wenn die Steigung der Spiralwindungen lmm beträgt. Diese Bemessung verleiht der Spirale, die aus duktilem Material und besonders vorteilhaft aus Kupfer oder Kupferlegierungen besteht, eine Verformbarkeit, die zur Aufnahme der Längenänderungen ausreicht, die infolge von Temperaturschwankungen beim Zusammenbau und beim Betreib entstehen.

In vielen Fällen reicht die mit dem Keramikrohr 2 und der Spirale 3 mit kreisförmigem Querschnitt erreichbare Fertigungsgenauigkeit für den erforderlichen Wärmekontakt aus. Für besonders hohe Anforderungen ist es jedoch vorteilhaft, die Ausführungsform der Spirale 4 anzuwenden, bei der die Spirale vor dem Einsetzen in die Bohrung 10 durch spanabhebende Verformung auf den erforderlichen Durchmesser gebracht und mit einer Lotschicht versehen ist.

Eine 20μm starke Lotschicht reicht für eine sichere Verbindung der Spirale 3, 4 mit dem Keramikrohr 2 und der Zylinderwand 9 aus. Bei dieser Stärke der Lotschicht tritt auch noch keine Schließung oder Brückenbildung im Bereich der Zwischenräume 6 ein. Als Lot eignet sich ein Silberlot, welches Nickel enthalten kann, insbesondere ein eutektisches Lot.

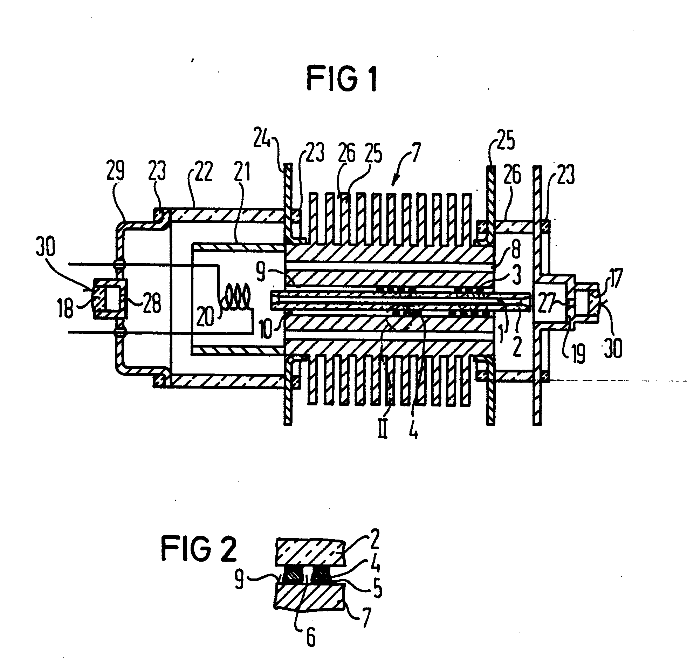

Der Wärmeabführeinrichtung 7 ist mit Kühlscheiben 25 einstückig verbunden. Die Kühlscheiben 25 sind im Beispiel der Fig. 1 durch Einsägen oder Einfräsen von Schlitzen 26 aus dem Vollen hergestellt. Diese Ausführungsform eignet sich insbesondere für kleine Abmessungen des Entladungsrohres, beispielsweise für einen Außendurchmesser der Kühlscheiben von 30mm.

Befestigungsflansche 24 und 25 dienen einerseits zur Fixierung der Lage des Entladungsrohres in einem nicht dargestellten Luftkanal, welcher die Kühlluft zuführt, und andererseits zur Befestigung der Elektroden und der Spiegel des Lasers. Die Anode 19 ist über ein Keramikrohr 26 mit dem Anschlußflansch 25 mechanisch fest und vakuumdicht verbunden und überragt das Keramikrohr in radialer Richtung, um eine ausreichende Kühlung zu ermöglichen. Die Anode 19 weist einen Durchbruch 27 auf, welcher zum Entladungskanal koaxial angeordnet ist und den Durchtritt des Laserlichtes zu einem Spiegel 17 ermöglicht. Der Spiegel 17 ist mit der Anode 19 mechanisch fest verbunden. Er weist in an sich bekannter Weise eine dem Laserstrahl zugewandte plane Fläche und eine gewölbte, verspiegelte Fläche 30 auf der dem Laserstrahl abgewandten Seite auf und besitzt daher eine fokussierende Wirkung.

Als Kathode 20 dient eine zum Entladungskanal koaxial angeordnete Wolframspirale 20, durch die der Laserstrahl hindurchtreten kann. Der Laserstrahl wird durch eine ebenfalls zum Entladungskanal koaxiale Öffnung 28 einer Verschlußkappe 29 auf einen Spiegel 18 hindurchgelassen. Der Spiegel 18 weist ähnlich dem Spiegel 17 eine plane Fläche 30 auf, die dem Laserstrahl zugewandt ist, und eine konvexe, verspiegelte oder teilverspiegelte, dem Enmtladungskanal abgewandte Außenfläche.

Die Verschlußkappe 29 ist über ein Keramikrohr 22 mit dem Anschlußflansch 24 der Wärmeabfuhreinrichtung 7 verlötet.

Alle Metall-Keramik-Verlötungen sind in an sich bekannter Weise dadurch besonders stabil ausgeführt, daß auf die nicht mit den Keramikrohren 22 bzw. 26 in Verbindung stehenden Flächen der entsprechenden Metallteile 19, 24, 25, 29 Ringe 23 aus Keramik aufgesetzt und gleichzeitig mit den Keramikrohren 22 bzw. 26 verlötet sind. Dadurch wird ein Brechen der Lötstellen infolge von thermischen Spannungen in an sich bekannter Weise verhindert.

Die Wolframspirale 20 ist von einem Abschirmrohr 21 umgeben, welches ein Aufsputten von Metall auf das Keramikrohr 22 verhindert.

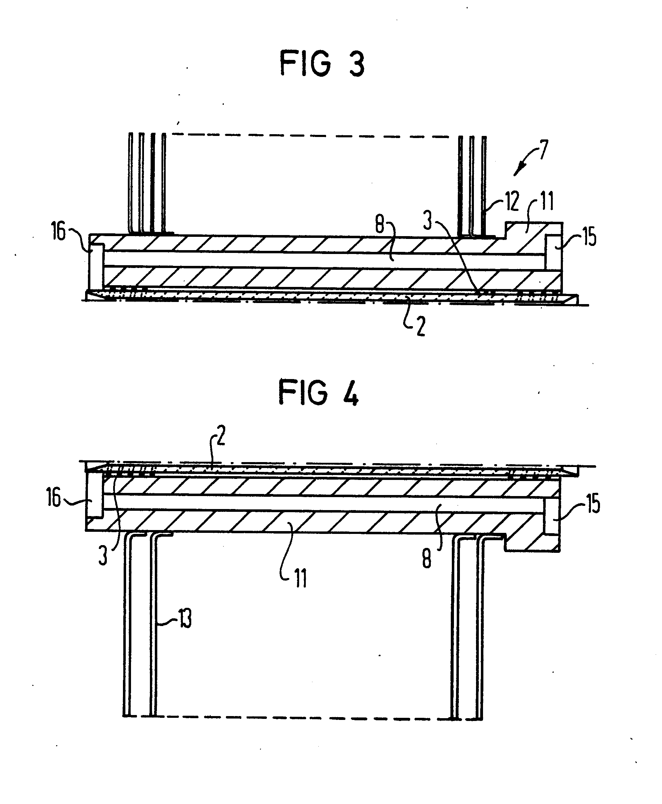

Die Ausführungsbeispiele der Fig. 3 und 4 zeigen Wärmeabführeinrichtungen, die aus einem Kupferstab 11 und Kühlscheiben 12 bzw. 13 zusammengesetzt ist. Diese Ausführungsformen eignen sich insbesondere für große Abmessungen des Entladungsrohres. Je nach Strömungsgeschwindigkeit der Kühlluft ist es zweckmäßig, Kühlscheiben 12 mit kleinerem Durchmesser und geringerem gegenseitigem Abstand (Fig. 3) oder Kühlscheiben 13 mit größerem Durchmesser und größerem gegenseitigem Abstand (Fig. 4) einzusetzen. Ausnehmungen 15 und 16 ermöglichen die mechanisch feste Verbindung des Entladungsrohres mit den übrigen, nicht dargestellten Teilen des Lasers.

Das Keramikrohr 2 besteht vorteilhaft aus Al$_2$O$_3$-Keramik, da dieses Material relativ billig ist und in Anbetracht der hier realisierbaren sehr geringen Wandstärken eine ausreichende Wärmeleitfähigkeit besitzt. Im Gegensatz zum wesentlich besser wärmeleitfähigen BeO ist Al$_2$O$_3$ auch nicht giftig, was einen weiteren erheblichen Vorteil darstellt.

Bei kleinen Abmessungen und nicht zu großen Ansprüchen an die mechanische Stabilität der Röhre können die Halteflansche 24 und 25, die Anode 19 und die Haltekappe 29 aus Kupfer hergestellt sein. Für größere mechanische Beanspruchung ist der Einsatz von Nickel-Eisenlegierungen mit einem an den der Keramik angepaßten Temperaturkoeffizienten vorteilhafter.

**Ansprüche**

1. Gasentladungsrohr für einen Ionenlaser, dessen Entladungskanal in einem Keramikrohr verläuft, welches ein das Keramikrohr umfassendes Wärmeübertragungsglied, eine mit dem Wärmeübertragungsgleid wärmeleitend verbundene Wärmeabführeinrichtung und zumindest einen Rückführungskanal für das Lasergas enthält, dadurch **gekennzeichnet,** daß das Wärmeübertragungsglied eine Spirale (3, 4) aus einem duktilen, gut wärmeleitfähigen Material ist, daß diese Spirale (3, 4) mit dem Keramikrohr (2) und der Zylinderwand (9) einer Bohrung (10) der Wärmeabführeinrichtung (7) mechanisch fest und gut wärmeleitend verbunden ist, daß zwischen den einzelnen Windungen der Spirale (3, 4) ein nicht mit festen Stoffen ausgefüllter Zwischenraum 6 vorhanden ist und daß die Wärmeabführeinrichtung (7) zumindest eine weitere Bohrung (8) zur Gasrückführung enthält.

2. Gasentladungsrohr nach Anspruch 1, dadurch **gekennzeichnet,** daß die Wärmeabführeinrichtung aus einem Kupferstab mit den benötigten Bohrungen und darauf aufgelöteten Kühlscheiben aus Kupfer zusammengesetzt ist und daß das Keramikrohr (2) einen Innendurchmesser aufweist, welcher an den Durchmesser des Entladungskanals (1) angepaßt ist und eine geringe, gerade noch zur Handhabung beim Zusammenbau notwendige mechanische Festigkeit gewährleistende Wandstärke aufweist.

3. Gasentladungsrohr nach einem der Ansprüche 1 oder 2, dadurch **gekennzeichnet,** daß das Keramikrohr aus Al$_2$O$_3$-Keramik besteht.

4. Gasentladungsrohr nach einem der Ansprüche 1 bis 3, dadurch **gekennzeichnet,** daß das Keramikrohr einen Innendurchmesser von etwa lmm und einen Außendurchmesser von etwa 3mm aufweist, daß die Spirale aus einem mit einer Schicht aus evtl. Nickel enthaltendem Silberlot umgebenden Kupferdraht mit einem Durchmesser von etwa 0,75mm gebildet ist und daß das Keramikrohr mit der Spirale und der Wärmeabführreinrichtung ohne weiteren Lotzusatz verlötet ist.

5. Gasentladungsrohr nach Anspruch 4, dadurch **gekennzeichnet,** daß die Spirale auf dem Keramikrohr durch spanabhebende Verformung auf den benötigten Außendurchmesser gebracht und anschließend mit Lot beschichtet und in die entsprechende Bohrung eingelötet ist.

6. Gasentladungsrohr nach einem der Ansprüche 4 oder 5, dadurch **gekennzeichnet,** daß die Steigung der Windungen der Spirale ca. 1mm beträgt.

7. Gasentladungsrohr nach einem der Ansprüche 1 bis 6, dadurch **gekennzeichnet,** daß an dem Entladungsrohr die Elektroden und die Resonatorspiegel des Lasers befestigt sind.

8. Verfahren zur Herstellung eines Entladungsrohres nach einem der Ansprüche 1 bis 7, dadurch **gekennzeichnet,** daß die Spirale zunächst auf das Keramikrohr aufgelötet, anschließend zur Korrektur des Außendurchmessers abgedreht oder abgeschliffen, mit einer ca. 20$\mu$m starken Schicht aus Silberlot versehen und - schließlich in die entsprechende Bohrung der Wärmeabführreinrichtung eingesetzt und durch Erwärmung ohne weitere Lotzugabe mit der Wärmeableiteinrichtung verlötet wird.

9. Verfahren zur Herstellung eines Entladungsrohres nach einem der Ansprüche 1 bis 7, dadurch **gekennzeichnet,** daß das Keramikrohr lötfähig gemacht wird und daß das Keramikrohr, die Spirale und die Wärmeableiteinrichtung in einem Arbeitsgang miteinander verlötet werden.

## FIG 1

## FIG 2

## FIG 3

## FIG 4

## EINSCHLÄGIGE DOKUMENTE

EP 86111167.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,A | US - A - 3 753 144 (KEARNS)<br>* Fig. 4; abstract *<br>-- | 1-3,7 | H 01 S  3/04<br>H 01 S  3/03 |
| A | US - A - 4 375 688 (TAGUCHI)<br>* Fig. 2-4; Spalte 3, Zeilen 50-60 *<br>-- | 1 | |
| A | GB - A - 1 283 486 (SIEMENS)<br>* Fig. 1; Seite 2, Zeilen 15-29 *<br>-- | 1 | |
| A | US - A - 4 553 241 (CHAFFEE)<br>* Fig. 1-5; Spalte 4, Zeilen 27-37 *<br>-- | 1 | |
| A | GB - A - 1 277 485 (CENTRE)<br>* Fig.; Seite 1, Zeilen 56-92 *<br>-- | 1 | RECHERCHIERTE SACHGEBIETE (Int. Cl. 4)<br><br>H 01 S |
| A | DE - B - 2 246 058 (MESSERSCHMITT)<br>* Fig.; Spalte 2, Zeilen 44-61 *<br>---- | 1 | |

Der vorliegende Recherchenbericht wurde für alle Patentansprüche erstellt.

| Recherchenort | Abschlußdatum der Recherche | Prüfer |
|---|---|---|
| WIEN | 23-10-1986 | HEINICH |